# DEMANDE DE BREVET EUROPEEN

(11) **EP 4 557 140 A1**
(43) Date de publication de la demande: **21.05.2025**
(21) Numéro de dépôt: 24212466.7
(22) Date de dépôt: 12.11.2024
(51) Int. Cl.: G06F 21/55, G06F 21/57, G06F 21/81

(54) **PROCÉDÉ DE CONFIGURATION D'UN MICROCONTRÔLEUR**

(30) Priorité: 17.11.2023 FR 2312642
(71) Demandeur: STMicroelectronics International N.V., 1228 Plan-les-Ouates, Geneva (CH)
(72) Inventeur: BENHAMMADI, Jawad, 38800 PONT DE CLAIX (FR)
(74) Mandataire: Cabinet Beaumont

(57) **Abrégé**

La présente description concerne un procédé de configuration d'un microcontrôleur doté d'une mémoire non volatile, dans lequel, lors d'une mise en oeuvre d'une opération de chargement de configuration du microcontrôleur à partir de données de la mémoire non volatile, si une anomalie est détectée, alors une nouvelle opération de chargement de configuration est mise en oeuvre au moins une fois sans que le microcontrôleur ne soit mis hors tension.

## Description

### Domaine technique

La présente description concerne de façon générale les procédés de configuration de microcontrôleurs ainsi que les microcontrôleurs mettant en oeuvre ces procédés.

### Technique antérieure

Lors de leur mise sous tension, de nombreux circuits électroniques comme les microcontrôleurs, démarrent par une phase de configuration basée sur des paramètres stockés dans une mémoire.

Cette mémoire est potentiellement sensible à des éléments externes tels que la température ou les champs magnétiques. Cette sensibilité peut engendrer des anomalies lors de la phase de configuration qui sont exploitées lors d'attaques.

### Résumé de l'invention

Il existe un besoin d'assurer une sécurité optimale lors de la phase de configuration des microcontrôleurs tout en limitant l'impact sur l'expérience utilisateur.

Un mode de réalisation pallie tout ou partie des inconvénients des procédés connus.

Un mode de réalisation prévoit un procédé de configuration d'un microcontrôleur doté d'une mémoire non volatile, dans lequel, lors d'une mise en oeuvre d'une opération de chargement de configuration du microcontrôleur à partir de données de la mémoire non volatile, si une anomalie est détectée, alors une nouvelle opération de chargement de configuration est mise en oeuvre au moins une fois sans que le microcontrôleur ne soit mis hors tension.

Un mode de réalisation prévoit un microcontrôleur doté d'une mémoire non volatile, dans lequel, lors d'une mise en oeuvre d'une opération de chargement de configuration du microcontrôleur à partir de données de la mémoire non volatile, si une anomalie est détectée, alors une nouvelle opération de chargement de configuration est mise en oeuvre au moins une fois sans que le microcontrôleur ne soit mis hors tension.

Selon un mode de réalisation, si, lors de la mise en oeuvre d'une opération de chargement de configuration du microcontrôleur depuis la mémoire non volatile aucune anomalie n'est détectée, alors une procédure de démarrage du microcontrôleur est mise en oeuvre.

Selon un mode de réalisation, un compteur est incrémenté à chaque nouvelle mise en oeuvre consécutive de ladite opération de chargement liée à une détection d'une anomalie.

Selon un mode de réalisation, lorsque le compteur dépasse un seuil N, alors le microcontrôleur est mis dans un mode de blocage.

Selon un mode de réalisation, à partir du moment où le microcontrôleur a été mis dans le mode de blocage, alors seule une mise hors tension du microcontrôleur permet qu'une nouvelle opération de chargement de configuration du microcontrôleur depuis la mémoire non volatile puisse être mise en oeuvre.

Selon un mode de réalisation, la détection d'anomalie est mise en oeuvre par comparaison de codes de correction d'erreur.

Selon un mode de réalisation, la détection d'anomalie est mise en oeuvre par comparaison de codes de redondance cyclique.

Selon un mode de réalisation, la détection d'anomalie est mise en oeuvre à partir de données de la mémoire non volatile.

Selon un mode de réalisation, la détection d'anomalie est mise en oeuvre par une interface mémoire du microcontrôleur.

Selon un mode de réalisation, la mémoire non volatile est une mémoire de type MRAM.

Selon un mode de réalisation, la mémoire non volatile est une mémoire de type à changement de phase.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de microcontrôleur du type auquel s'appliquent les modes de réalisation décrits ;
la figure 2 représente sous forme de blocs un procédé de configuration du microcontrôleur de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

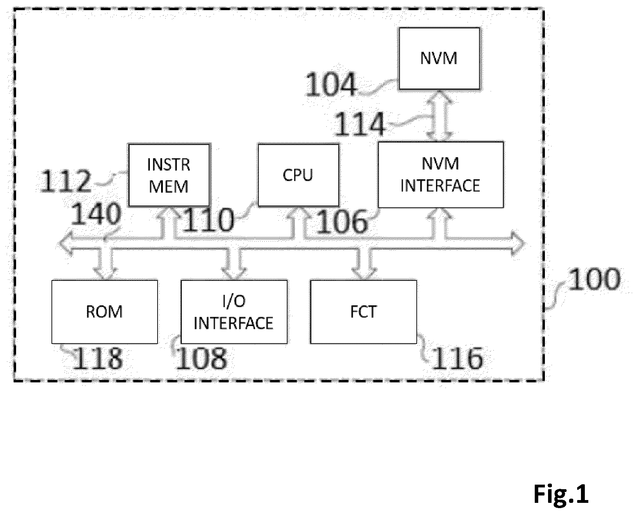

La figure 1 représente, de façon très schématique et sous forme de blocs, un exemple de microcontrôleur 100 du type auquel s'appliquent les modes de réalisation décrits.

Le microcontrôleur 100 comprend une mémoire non-volatile 104 (NVM), par exemple de type mémoire FLASH ou MRAM ou à changement de phase, capable de communiquer, via un bus de communication 114, avec une interface de mémoire non-volatile 106 (MEM INTERFACE) configurée pour écrire ou lire des données dans et depuis la mémoire non-volatile 104.

Le microcontrôleur 100 comprend en outre, par exemple, une unité de traitement 110 (CPU) comprenant un ou plusieurs processeurs sous contrôle d'instructions stockées dans une mémoire d'instructions 112 (INSTR MEM). La mémoire d'instruction 112 est par exemple une mémoire volatile de type à accès aléatoire (en anglais Random Access Memory, RAM) . L'unité de traitement 110 et la mémoire 112 communiquent, par exemple, via un bus système 140 (de données, d'adresses et de commande). La mémoire 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le microcontrôleur 100 peut intégrer d'autres circuits mettant en œuvre d'autres fonctions (par exemple, une ou plusieurs mémoires volatiles et/ou non-volatiles, ou d'autres unités de traitement), symbolisées par un bloc 116 (FCT) en figure 1. Parmi ces autres circuits, le microcontrôleur 100 comporte par exemple une mémoire morte ou statique 118 (ROM).

Lors de sa mise sous tension, le microcontrôleur met en oeuvre une phase, autrement dit une opération, de configuration (OBL, Option Byte Loading en anglais) basée sur des paramètres, par exemple des octets d'option utilisateurs (Option bytes en anglais) stockés dans une mémoire. Lors de cette phase de configuration, les paramètres de configuration sont chargés depuis la mémoire 104 vers par exemple l'unité de traitement 110.

La mémoire 104 est par exemple sensible à la température ou à un champ magnétique externe, ce qui peut impacter le cyclage mais également la programmation ou encore la lecture. Des attaques perpétrées par des pirates peuvent également profiter de cette sensibilité afin de modifier la configuration du microcontrôleur 100. La phase de configuration, qui dépend de données issues de la mémoire 104, est donc particulièrement critique et il convient de la sécuriser. Une solution serait de bloquer le fonctionnement du microcontrôleur dès qu'une anomalie est détectée lors de la phase de configuration et de ne permettre le déblocage du microcontrôleur 100 uniquement après que celui-ci ait été mis hors-tension. Cette solution a néanmoins le désavantage de dégrader l'expérience utilisateur si l'anomalie n'est que passagère et qu'elle n'est pas liée à une attaque.

Les modes de réalisation décrits proposent que, lors d'une mise en oeuvre d'une opération de chargement d'une configuration du microcontrôleur à partir de données de la mémoire non volatile 104, si une anomalie est détectée, alors une nouvelle opération de chargement de configuration est mise en oeuvre au moins une fois.

Cela permet que, lorsqu'une perturbation temporaire entraîne une anomalie lors de l'opération de configuration, alors le microcontrôleur recommence l'opération de chargement de configuration sans que l'utilisateur ne mette nécessairement hors tension le microcontrôleur.

Cela permet en outre de préserver la sécurité de l'opération de chargement de configuration car le microcontrôleur ne passe pas en phase de démarrage si une anomalie est détectée.

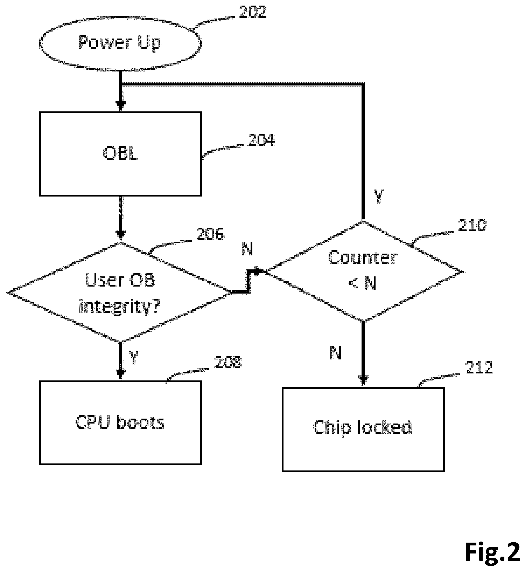

La figure 2 représente sous forme de blocs un procédé de configuration du microcontrôleur de la figure 1.

Dans une première étape 202 (Power up), le microcontrôleur 100 est mis sous tension.

Dans une étape ultérieure 204 (OBL), l'opération de chargement de configuration est mise en oeuvre par exemple par l'interface mémoire 106 pour charger les données de configuration, par exemple sous forme d'octets, du microcontrôleur 100.

Dans une étape 206 (User OB integrity?), ultérieure à l'étape 204, une opération de détection d'anomalie de l'opération de chargement de configuration est mise en oeuvre, par exemple via l'interface de mémoire 106. Dans un exemple, l'étape 206 consiste à vérifier l'intégrité, ou la correspondance, de codes de correction d'erreurs ou de codes de redondance cyclique liés aux octets d'options utilisateurs chargés.

Si aucune anomalie n'est détectée (branche Y), alors une étape 208 (CPU boots) est réalisée. Dans cette étape 208, une procédure de démarrage du microcontrôleur 100 est mise en oeuvre, par exemple avec l'unité de traitement 110 et/ou en chargeant et exécutant des programmes de démarrage dans la mémoire 104.

Si une anomalie est détectée (branche N), alors une étape 210 (Counter<N) est réalisée. Dans cette étape 210, un compteur, par exemple mis en oeuvre dans l'interface mémoire 106, est incrémenté à chaque recommencement consécutif de l'opération de chargement de configuration lié à la détection d'une anomalie. Lorsque la valeur du compteur dépasse un seuil N, par exemple N=2 à 10, alors une étape 212 (Chip locked) est effectuée. Si la valeur du compteur est inférieure au seuil (branche Y) alors le procédé repart à l'étape 204 pour une nouvelle opération de chargement de configuration sans qu'il n'y ait besoin d'une mise hors tension.

Dans cette étape 212, le microcontrôleur est mis dans un mode de blocage. Dans ce mode, le microcontrôleur n'est par exemple plus accessible en lecture ou écriture, et n'effectue par exemple plus de tâches. Dans ce mode, seule une mise hors-tension, par exemple en débranchant une batterie alimentant le microcontrôleur 100, permettra de revenir à l'étape 202.

Le procédé présenté dans la figure 2 permet de recommencer l'opération de chargement de configuration, sans mettre hors tension le microcontrôleur 100 tant qu'une anomalie est détectée, et ce jusqu'à atteindre le nombre de recommencements prédéterminé N. Ce cas correspond par exemple à des anomalies transitoires qui ne sont pas liées à une attaque. Si, une ou des anomalies sont toujours repérées malgré le fait que l'opération de chargement de configuration soit répétée plusieurs fois consécutivement, alors il peut s'agir d'une attaque et le microcontrôleur sera mis dans le mode de blocage pour qu'il puisse être sécurisé et que des secrets, tels que des clés de cryptage, ne puissent pas être dévoilés.

La valeur du seuil N pourra être choisie en fonction de la robustesse aux attaques ou aux paramètres physiques extérieurs. Ainsi si N=2 alors une attaque sera arrêtée très rapidement mais cela bloquera le microcontrôleur rapidement en cas de perturbation temporaire relativement longue. Plus N sera élevé, plus l'attaque pourra durer mais plus il sera possible de laisser passer une perturbation extérieure sans avoir à mettre hors tension le microcontrôleur 100.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la détection d'anomalie lors de l'étape 206 pourra consister en la vérification d'autres valeurs que celles liées à des octets d'option d'utilisateur ou encore l'utilisation de procédés de vérification d'erreur autres que les codes de correction d'erreur ou autres que les codes de redondance cyclique.

Enfin, la mise en oeuvre pratique des modes de réalisation et variantes décrits est à la portée de la personne du métier à partir des indications fonctionnelles données ci-dessus. En particulier, même si le procédé a été décrit dans le cas d'un microcontrôleur, la personne du métier pourra mettre en oeuvre ses connaissances pour appliquer ce procédé à d'autres types de circuits électroniques tels que des systèmes sur puce (System on chip, SOC, en anglais) utilisant une phase de configuration à partir de données stockées dans une mémoire.

## Revendications

1. Procédé de configuration d'un microcontrôleur (100) doté d'une mémoire non volatile (104), dans lequel, lors d'une mise en oeuvre d'une opération de chargement de configuration du microcontrôleur (100) à partir de données de la mémoire non volatile (104), si une anomalie est détectée, alors une nouvelle opération de chargement de configuration est mise en oeuvre au moins une fois sans que le microcontrôleur ne soit mis hors tension.

2. Microcontrôleur (100) doté d'une mémoire non volatile (104), dans lequel, lors d'une mise en oeuvre d'une opération de chargement de configuration du microcontrôleur à partir de données de la mémoire non volatile (104), si une anomalie est détectée, alors une nouvelle opération de chargement de configuration est mise en oeuvre au moins une fois sans que le microcontrôleur ne soit mis hors tension.

3. Procédé selon la revendication 1 ou microcontrôleur selon la revendication 2, dans lequel, si, lors de la mise en oeuvre d'une opération de chargement de configuration du microcontrôleur depuis la mémoire non volatile (104) aucune anomalie n'est détectée, alors une procédure de démarrage du microcontrôleur est mise en oeuvre.

4. Procédé selon la revendication 1 ou 3, ou microcontrôleur selon la revendication 2 ou 3, dans lequel un compteur est incrémenté à chaque nouvelle mise en oeuvre consécutive de ladite opération de chargement liée à une détection d'une anomalie.

5. Procédé ou microcontrôleur selon la revendication 4, dans lequel, lorsque le compteur dépasse un seuil N, alors le microcontrôleur est mis dans un mode de blocage.

6. Procédé ou microcontrôleur selon la revendication 5, dans lequel, à partir du moment où le microcontrôleur a été mis dans le mode de blocage, alors seule une mise hors tension du microcontrôleur permet qu'une nouvelle opération de chargement de configuration du microcontrôleur (100) depuis la mémoire non volatile (104) puisse être mise en oeuvre.

7. Procédé selon l'une quelconque des revendications 1 ou 3 à 6, ou microcontrôleur selon l'une quelconque des revendications 2 à 6, dans lequel la détection d'anomalie est mise en oeuvre par comparaison de codes de correction d'erreur (ECC).

8. Procédé selon l'une quelconque des revendications 1 ou 3 à 7, ou microcontrôleur selon l'une quelconque des revendications 2 à 7, dans lequel la détection d'anomalie est mise en oeuvre par comparaison de codes de redondance cyclique (CRC).

9. Procédé selon l'une quelconque des revendications 1 ou 3 à 8, ou microcontrôleur selon l'une quelconque des revendications 2 à 8, dans lequel la détection d'anomalie est mise en oeuvre à partir de données de la mémoire non volatile (104).

10. Procédé ou microcontrôleur selon la revendication 9, dans lequel la détection d'anomalie est mise en oeuvre par une interface mémoire (106) du microcontrôleur (100).

11. Procédé selon l'une quelconque des revendications 1 ou 3 à 10, ou microcontrôleur selon l'une quelconque des revendications 2 à 10, dans lequel la mémoire non volatile (104) est une mémoire de type MRAM.

12. Procédé selon l'une quelconque des revendications 1 ou 3 à 10, ou microcontrôleur (100) selon l'une quelconque des revendications 2 à 10, dans lequel la mémoire non volatile (104) est une mémoire de type à changement de phase.
